(19) 

Europäisches
Patentamt

European
Patent Office

Office européen
des brevets

(11)  **EP 4 501 628 A1**

(12)  **EUROPEAN PATENT APPLICATION**
published in accordance with Art. 153(4) EPC

(43) Date of publication:
05.02.2025 Bulletin 2025/06

(21) Application number: 23779217.1

(22) Date of filing: 02.03.2023

(51) International Patent Classification (IPC):
*B32B 27/00* (2006.01)  *B29C 65/48* (2006.01)
*B32B 7/12* (2006.01)  *C09J 5/06* (2006.01)
*C09J 123/02* (2006.01)

(52) Cooperative Patent Classification (CPC):
B29C 65/48; B32B 7/12; B32B 27/00; C09J 5/06;
C09J 123/02

(86) International application number:
PCT/JP2023/007911

(87) International publication number:
WO 2023/189188 (05.10.2023 Gazette 2023/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.03.2022 JP 2022061261

(71) Applicant: Zeon Corporation
Tokyo 100-8246 (JP)

(72) Inventors:
• CHIBA, Daido
Tokyo 100-8246 (JP)
• NISHIOKA, Hiroya
Tokyo 100-8246 (JP)

(74) Representative: Maiwald GmbH
Elisenhof
Elisenstraße 3
80335 München (DE)

(54) **BONDED BODY AND METHOD FOR MANUFACTURING SAME**

(57)    Provided is an assembly having excellent flexural elastic modulus and joint strength and having suppressed reduction of transparency due to increased haze in the presence of water vapor generation. The assembly includes a plurality of shaped products having a thermoplastic resin as a material and a joining layer joining the shaped products to one another. The joining layer contains at least one type of cycloolefin polymer and a solvent component having a boiling point in a specific range. The assembly contains the solvent component having a boiling point in a specific range in a specific trace concentration range.

*FIG. 1A*

EP 4 501 628 A1

# FIG. 1B

**Description**

TECHNICAL FIELD

The present disclosure relates to an assembly and a method for manufacturing the same.

BACKGROUND

The joining of a resin substrate in which microchannels are formed and a lid substrate through heating, via a joining layer interposed therebetween, so as to manufacture a resin assembly as a microchannel chip used for analysis, testing, etc. of biological substances such as DNA, RNA, and proteins, chemical substances, and so forth has previously been described (for example, refer to Patent Literature (PTL) 1 and 2).

Moreover, the application of a resin dissolved in a solvent onto the surface of a resin substrate and the removal of solvent by drying to cause layered formation of a resin layer in manufacture of a resin laminate such as a laminate film or adhesive tape has also previously been described (for example, PTL 3 and 4).

CITATION LIST

Patent Literature

PTL 1: WO2021/241516A1
PTL 2: JP4752364B2
PTL 3: JP2007-276142A
PTL 4: JP2003-306650A

SUMMARY

(Technical Problem)

A technique of producing a resin assembly through joining of a plurality of resin shaped products via a joining layer is expected to have high applicability in manufacturing of not only microchannel chips, but also multiwell plates, other resin components, and all sorts of members. It is desirable for such a resin assembly to have excellent mechanical characteristics such as flexural elastic modulus and joint strength. Moreover, in a situation in which an assembly is subjected to autoclave sterilization and is then used, water vapor generated in the autoclave may remain in the resin and tends to increase haze and reduce transparency of the assembly. Therefore, it is also desirable for an assembly to suppress reduction of transparency due to increased haze such as described above.

Accordingly, an object of the present disclosure is to provide an assembly having excellent flexural elastic modulus and joint strength and having suppressed reduction of transparency due to increased haze in the presence of water vapor generation and also to provide a method for manufacturing the same.

(Solution to Problem)

Specifically, with the aim of advantageously solving the problems set forth above, a presently disclosed assembly comprises: a plurality of shaped products having a thermoplastic resin as a material; and a joining layer joining the shaped products to one another, wherein the joining layer contains at least one type of cycloolefin polymer and a solvent component having a boiling point of not lower than 70°C and not higher than 150°C, and the assembly contains not less than 100 mass ppm and not more than 800 mass ppm of the solvent component having a boiling point of not lower than 70°C and not higher than 150°C relative to total mass of the assembly.

As a result of the joining layer containing at least one type of cycloolefin polymer and the content of a solvent component in the assembly being in a specific range, it is possible to provide an assembly that has excellent joint strength and flexural elastic modulus and that also has excellent transparency after autoclave sterilization treatment of the assembly. The proportional content of a solvent component can be measured by a method described in the EXAMPLES section, for example.

In the presently disclosed assembly, the joining layer preferably has a thickness of not less than 0.1 $\mu$m and not more than 5 $\mu$m. When the thickness of the joining layer does not exceed the upper limit set forth above, the joining layer has a thin thickness and is a thin film, which improves transparency of the assembly because there is less chance for haze to arise in the joining layer and also, in a situation in which the assembly is used as a device for biological or chemical analysis, such as a microchannel chip or a multiwell plate, for example, inhibits deformation of channels of the microchannel chip or wells of the multiwell plate when steam sterilization treatment is performed. Conversely, when the thickness of the joining layer does not fall below the lower limit set forth above, an effect of joint strength through the joining layer is displayed. The thickness of a joining layer can be measured by a method described in the EXAMPLES section, for example.

In the presently disclosed assembly, the thermoplastic resin is preferably a resin that contains a cycloolefin polymer. By using a cycloolefin polymer resin as the thermoplastic resin, it is possible to impart excellent characteristics such as heat resistance and dimensional stability to the assembly. Moreover, as a result of the type of polymer being of the same category as the cycloolefin polymer serving as a material of the joining layer, fusion of the thermoplastic resin with the cycloolefin polymer serving as a material of the joining layer is facilitated, and even better joint strength can be imparted to the assembly.

In the presently disclosed assembly, the solvent component preferably includes at least one among cyclohexane, methylcyclohexane, ethylcyclohexane, xylene, and toluene. These solvent components have high dissolving ability with respect to a cycloolefin polymer and thus make it possible to obtain a joining layer having excellent uniformity. The type of solvent component can be identified by a method described in the EXAMPLES section, for example.

A presently disclosed method for manufacturing an assembly comprises: applying a joining agent containing at least one type of cycloolefin and a solvent component having a boiling point of not lower than 70°C and not higher than 150°C onto at least one surface of a first shaped product having a thermoplastic resin as a material; performing drying treatment of the joining agent that has been applied to remove a majority of the solvent component from the joining agent and form a joining layer on the surface of the first shaped product; and arranging a second shaped product having a thermoplastic resin as a material in contact with the joining layer and performing heating and pressing treatment to join the first shaped product and the second shaped product via the joining layer and obtain an assembly containing not less than 100 mass ppm and not more than 800 mass ppm of the solvent component relative to total mass of the assembly. By forming a joining layer using a joining agent that contains at least one type of cycloolefin and a solvent component having a boiling point of not lower than 70°C and not higher than 150°C and by setting the content of the solvent component in an assembly in a specific range, it is possible to manufacture an assembly that has excellent joint strength and flexural elastic modulus and that also has excellent transparency after autoclave sterilization treatment of the assembly.

(Advantageous Effect)

According to the present disclosure, it is possible to provide an assembly having excellent flexural elastic modulus and joint strength and having suppressed reduction of transparency due to increased haze in the presence of water vapor generation and also to provide a method for manufacturing the same.

BRIEF DESCRIPTION OF THE DRAWINGS

In the accompanying drawings:

FIG. 1A illustrates a side view (top) and a plan view (bottom) of a fully joined assembly 30 that is used for measuring flexural elastic modulus;
FIG. 1B illustrates a schematic view of flexural elastic modulus measurement;
FIG. 2A illustrates a side view (top) and a plan view (bottom) of a joint strength measurement assembly 20 that is used for measuring joint strength; and
FIG. 2B illustrates a schematic view of joint strength measurement.

DETAILED DESCRIPTION

The following provides a detailed description of embodiments of the present disclosure.

(Assembly)

The presently disclosed assembly includes a plurality of shaped products having a thermoplastic resin as a material and a joining layer joining the shaped products to one another. Moreover, features of the presently disclosed assembly are that the joining layer contains at least one type of cycloolefin and a solvent component having a boiling point in a specific range and that the assembly contains the solvent component having a boiling point in a specific range in a specific trace concentration range. The boiling point in a specific range is required to be not lower than 70°C and not higher than 150°C. The specific trace concentration range is required to be not less than 100 mass ppm and not more than 800 mass ppm relative to the total mass of the assembly.

As a result of the joining layer containing at least one type of cycloolefin polymer and the content of the solvent component in the assembly being in a specific range, it is possible to provide an assembly that has excellent joint strength and flexural elastic modulus and that also has excellent transparency after autoclave sterilization treatment of the assembly.

<Assembly>

The term "assembly" refers to products, components, and all sorts of members (particularly those made of resin) in which a plurality of shaped products are joined via a joining layer. The assembly may, for example, be a device (for example, a microchannel chip or a multiwell plate) that is used for analysis, testing, reaction, or the like of a biological substance (for example, DNA, RNA, or protein) or a chemical substance (low-molecular weight compound, macromolecular compound, etc.) or for analysis, testing, or culture of a living organism or life-like entity (bacteria, cultured cell, virus, etc.); a resin product; a component; a member (for example, a resin caster wheel, resin screw, resin housing, or resin packing); or the like, but is not limited thereto. In particular, the assembly is preferably a device for analysis, testing, or the like (for example, a microchannel chip or a multiwell plate) with which good transparency is desirable.

<Shaped products>

The term "shaped products" refers to a plurality of resin members for forming an assembly through joining thereof. The shape of the shaped products may be set according to the type, function, and shape of the assembly. For example, in a case in which the assembly is a microchannel chip, the shaped products may be a combination of a channel substrate and a lid substrate. In a case in which the assembly is a multiwell plate, the shaped products may be a combination of a well substrate and a lid substrate. In either of these cases, the lid substrate may be a flat plate or may be a flat plate having a hole opened therein.

The shaped products can be formed through injection molding of a resin, for example. The formation of a recessed structure or opening structure that is formed in a joining surface, such as a channel, well, or through hole that can be formed in a substrate, can be performed by a microprocessing technique such as photolithography or thermal imprinting, cutting, injection molding, or the like, for example. Moreover, the formation of a recessed structure or opening structure may be performed with respect to a shaped product on which a joining layer has not been formed or may be performed with respect to a shaped product after formation of a joining layer. The formation of a recessed structure or an opening structure with respect to a shaped product on which a joining layer has not been formed can be performed by a microprocessing technique such as photolithography or thermal imprinting, cutting, injection molding, or the like, for example. The formation of a recessed structure or an opening structure with respect to a shaped product after formation of a joining layer can be performed by adopting a microprocessing technique such as photolithography or thermal imprinting, cutting, or the like with respect to a surface of the shaped product at which the joining layer has been formed.

«Material of shaped products: Thermoplastic resin»

The shaped products have a thermoplastic resin as a material. The plurality of shaped products may each have the same thermoplastic resin as a material or may each have a different thermoplastic resin as a material. By using a thermoplastic resin as the material of the shaped products, it is easy for joining interfaces of the shaped products to merge through heating when the shaped products are joined via the joining layer by performing heating and pressing treatment, and it is possible to impart excellent joint strength to the assembly. The thermoplastic resin may be a resin that contains a cycloolefin polymer, polystyrene, polycarbonate, acrylic polymer, polyethylene terephthalate, or the like, for example, but is not limited thereto. The cycloolefin polymer may be any of those that are described further below, for example. The acrylic polymer is a polymer that includes a repeating unit (polymerization unit) obtained through polymerization of an acrylate or methacrylate (hereinafter, also abbreviated as "(meth)acrylate") or through polymerization of a derivative thereof. Specifically, the acrylic polymer may be a homopolymer of a (meth)acrylate, a copolymer of (meth)acrylates, or a copolymer of a (meth)acrylate and another monomer that is copolymerizable with the (meth)acrylate. The (meth)acrylate may be an acrylic acid alkyl ester such as methyl acrylate, ethyl acrylate, n-propyl acrylate, isopropyl acrylate, n-butyl acrylate, t-butyl acrylate, or 2-ethylhexyl acrylate; an acrylic acid alkoxyalkyl ester such as 2-methoxyethyl acrylate or 2-ethoxyethyl acrylate; a 2-(perfluoroalkyl)ethyl acrylate such as 2-(perfluorobutyl)ethyl acrylate or 2-(perfluoropentyl)ethyl acrylate; a methacrylic acid alkyl ester such as methyl methacrylate, ethyl methacrylate, n-propyl methacrylate, isopropyl methacrylate, n-butyl methacrylate, t-butyl methacrylate, 2-ethylhexyl methacrylate, lauryl methacrylate, tridecyl methacrylate, or stearyl methacrylate; or a 2-(perfluoroalkyl)ethyl methacrylate such as 2-(perfluorobutyl)ethyl methacrylate or 2-(perfluoropentyl)ethyl methacrylate.

By using a cycloolefin polymer as the thermoplastic resin, fusion of the thermoplastic resin with the cycloolefin polymer serving as a material of the joining layer is facilitated and even better joint strength can be imparted to the assembly because the type of polymer is of the same category as the cycloolefin polymer serving as a material of the joining layer. Moreover, excellent characteristics can be imparted to the assembly because a cycloolefin polymer is a resin having excellent heat resistance, dimensional stability, acid resistance, alkali resistance, hydrolysis resistance, light-weight, and ease of resin shaping. In particular, since a cycloolefin polymer experiences little reduction of joint strength over time and dimensional change due to moisture absorption, a cycloolefin polymer is suitable as a shaped product material for imparting excellent durability to the assembly. Furthermore, a cycloolefin polymer is also suitable in a case in which the assembly is used as a device for optical signal detection such as a microchannel chip or multiwell plate, for example, because a cycloolefin polymer is a material having transparency and low autofluorescence. A shaped product that has undergone corona discharge treatment of a joining surface may be used in order to increase joint strength. Note that the glass-transition temperature ($Tg_1$) of the shaped products is described further below.

<<Thickness of shaped products>>

The thickness of the shaped products (thickness in a stacking direction when the assembly is regarded as a laminate of the shaped products and the joining layer) is not specifically limited, but may be 0.5 mm or more, preferably 1 mm or more, and more preferably 1.5 mm or more, for example, and may be 100 mm or less, preferably 50 mm or less, and more preferably 20 mm or less, for example.

<Joining layer>

The "joining layer" is a layer-type member that is interposed between the shaped products and that is for joining the shaped products to one another. Features of the joining layer are that it contains at least one type of cycloolefin polymer and that it contains a solvent component having a boiling point in a specific range such that the proportional content of the solvent component in the assembly is in a specific trace concentration range. The boiling point in a specific range is required to be not lower than 70°C and not higher than 150°C. The specific trace concentration range is required to be not less than 100 mass ppm and not more than 800 mass ppm relative to the total mass of the assembly. As a result of the joining layer containing at least one type of cycloolefin polymer and containing a solvent component having a boiling point in a specific range such that the proportional content of the solvent component in the assembly is in a specific trace concentration range, it is possible to provide an assembly that has excellent joint strength and flexural elastic modulus and that also has excellent transparency after autoclave sterilization treatment of the assembly.

<<Main material of joining layer: Cycloolefin polymer>>

The joining layer contains at least one type of cycloolefin polymer as a main material (for example, in a proportion of 50 mass% or more, preferably 80 mass% or more, more preferably 90 mass% or more, and even more preferably 95 mass% or more relative to the overall joining layer). By using a cycloolefin polymer as the main material of the joining layer, this facilitates fusion between the joining layer and the shaped products, particularly in a case in which a cycloolefin polymer is used as a material of the shaped products because the joining layer and the shaped products are resins of the same category (i.e., cycloolefin polymers), and thus adhesiveness between the joining layer and the shaped products increases, and excellent joint strength can be imparted to the assembly. Moreover, excellent characteristics can be imparted to the assembly because a cycloolefin polymer is a resin having excellent heat resistance, dimensional stability, acid resistance, alkali resistance, hydrolysis resistance, light-weight, and ease of resin shaping. In particular, since a cycloolefin polymer experiences little reduction of joint strength over time and dimensional change due to moisture absorption, a cycloolefin polymer is suitable as a joining layer material for imparting excellent durability to the assembly. Furthermore, a cycloolefin polymer is also suitable in a case in which the assembly is used as a device for optical signal detection such as a microchannel chip or multiwell plate, for example, because a cycloolefin polymer is a material having transparency and low autofluorescence. Note that the glass-transition temperature ($Tg_2$) of the joining layer is described further below.

<<Other characteristics of cycloolefin polymer for joining layer>>

With regard to other characteristics of the cycloolefin polymer that is used as the main material of the joining layer, it is preferable that the cycloolefin polymer has a water absorption of 0.01 mass% or less, for example, from a viewpoint of inhibiting the occurrence of haze due to water vapor absorption and the reduction of durability due to moisture absorption.

<<Thickness of joining layer>>

The thickness of the joining layer should be of a minimum thickness that makes it possible to ensure adhesiveness of the respective joining surfaces of the shaped products via the joining layer. For example, the thickness of the joining layer may be 0.1 μm or more, preferably 0.12 μm or more, more preferably 0.15 μm or more, and even more preferably 0.2 μm or more. Moreover, the thickness of the joining layer may be 5 μm or less, preferably 4.5 μm or less, more preferably 4.2 μm or less, and even more preferably 4 μm or less, for example. The thickness of the joining layer preferably does not exceed any of the upper limits set forth above, and a thinner joining layer thickness results in the joining layer being a thin film, which improves transparency of the assembly because there is less chance for haze to arise in the joining layer and also, in a situation in which the assembly is used as a device for biological or chemical analysis, such as a microchannel chip or a multiwell plate, for example, inhibits deformation of channels of the microchannel chip or wells of the multiwell plate when steam sterilization treatment is performed. Conversely, the effect of joint strength through the joining layer is reduced when the thickness of the joining layer is thinner than any of the lower limits set forth above.

In a case in which the assembly includes a plurality of joining layers, at least one of the joining layers may be in any of the ranges set forth above, and it is preferable that all of the joining layers are in any of the ranges set forth above. The thickness of the joining layer can be controlled through adjustment of the proportional content of a cycloolefin in a joining agent containing a cycloolefin and a solvent component that is used to form the joining layer, the amount of the joining agent that is applied, other application conditions, and drying conditions (for example, temperature and time) for removal of the solvent component during formation of the joining layer. The thickness of a joining layer can be measured by a method described in the EXAMPLES section, for example.

<Cycloolefin polymer>

The cycloolefin polymer that can serve as a material of the shaped products and the cycloolefin polymer that is a main material of the joining layer may each be a polymer or copolymer (hereinafter, also referred to collectively using the term "polymer") that is obtained through polymerization of a monomer such as described below, or may be a hydrogenated product thereof, for example. The cycloolefin polymer may be crystalline or amorphous, but is preferably amorphous. It is preferable that a norbornene-based monomer is used as a monomer of the cycloolefin polymer. The norbornene-based monomer is a monomer having a norbornene ring. The norbornene-based monomer may be a bicyclic monomer such as bicyclo[2.2.1]hept-2-ene (commonly referred to as norbornene), 5-ethylidene-bicyclo[2.2.1]hept-2-ene (commonly referred to as ethylidene norbornene), or a derivative of either thereof (derivative having a substituent on a ring); a tricyclic monomer such as tricyclo[5.2.1.0$^{2,6}$]deca-3,8-diene (commonly referred to as dicyclopentadiene) or a derivative thereof; a tetracyclic monomer such as tetracyclo[7.4.0.0$^{2,7}$.1$^{10,13}$]tetradeca-2,4,6,11-tetraene (commonly referred to as methanotetrahydrofluorene), tetracyclo[6.2.1.1$^{3,6}$.0$^{2,7}$]dodec-4-ene (commonly referred to as tetracyclododecene), 9-ethylidenetetracyclo[6.2.1.1$^{3,6}$.0$^{2,7}$]dodec-4-ene, or a derivative of any thereof; or the like, for example. These monomers may have a substituent at any position. Examples of possible substituents include an alkyl group, an alkylene group, a vinyl group, an alkoxycarbonyl group, and an alkylidene group. The norbornene-based monomer may include two or more types of such substituents. Specific examples of derivatives include 8-methoxycarbonyl-tetracyclo[4.4.0.1$^{2,5}$.1$^{7,10}$]dodec-3-ene, 8-methyl-8-methoxycarbonyl-tetracyclo[4.4.0.1$^{2,5}$.1$^{7,10}$]dodec-3-ene, and 8-ethylidene-tetracyclo[4.4.0.1$^{2,5}$.1$^{7,10}$]dodec-3-ene. One of these norbornene-based monomers may be used individually, or two or more of these norbornene-based monomers may be used in combination. The cycloolefin polymer may be an addition polymer, a ring-opened polymer, or a hydrogenated product of either thereof, and is preferably a ring-opened polymer or a hydrogenated ring-opened polymer.

The aforementioned ring-opened polymer can be produced by a method using a ring-opening polymerization catalyst. A catalyst comprising a halide of a metal such as ruthenium or osmium, a nitrate or acetylacetone compound, and a reductant; or a catalyst comprising a halide of a metal such as titanium, zirconium, tungsten, or molybdenum or acetylacetone compound and an organoaluminum compound, for example, can be used as the ring-opening polymerization catalyst. The ring-opened polymer can be produced by a method using a metathesis reaction catalyst (ring-opening polymerization catalyst) such as a ruthenium carbene complex catalyst described in WO2010/110323A1, a method using a ring-opening polymerization catalyst such as a tungsten(phenylimide)tetrachloride tetrahydrofuran complex or tungsten hexachloride described in JP2015-54885A, or the like, for example.

The aforementioned addition polymer can be obtained by polymerizing monomer(s) using a commonly known addition polymerization catalyst such as a catalyst comprising a titanium, zirconium, or vanadium compound and an organoaluminum compound. The addition polymer can be produced by, for example, performing addition copolymerization of a monomer of a cycloolefin polymer and, as necessary, a monomer (other monomer) that can be addition copolymerized, in the presence of a metallocene catalyst described in WO2017/199980A1.

Examples of other monomers that can be ring-opening copolymerized with a norbornene-based monomer include cycloolefin-based monomers that are monocyclic such as cyclohexene, cycloheptene, and cyclooctene.

One of these other monomers that can be ring-opening copolymerized with a norbornene-based monomer may be used individually, or two or more of these other monomers that can be ring-opening copolymerized with a norbornene-based monomer may be used in combination. In a case in which a norbornene-based monomer is ring-opening copolymerized with another monomer that can be ring-opening copolymerized therewith, appropriate selection is made such that, in the ring-opened polymer, the proportions of structural units derived from the norbornene-based monomer and structural units derived from the other monomer that can be ring-opening copolymerized are, as a weight ratio, normally in a range of 70:30 to 99:1, preferably in a range of 80:20 to 99:1, and more preferably in a range of 90:10 to 99:1.

Examples of other monomers that can be addition copolymerized with a norbornene-based monomer include $\alpha$-olefins having a carbon number of 2 to 20 such as ethylene, propylene, 1-butene, 1-pentene, and 1-hexene, and derivatives thereof; cycloolefins such as cyclobutene, cyclopentene, cyclohexene, cyclooctene, and 3a,5,6,7a-tetrahydro-4,7-methano-1H-indene, and derivatives thereof; and non-conjugated dienes such as 1,4-hexadiene, 4-methyl-1,4-hexadiene, 5-methyl-1,4-hexadiene, and 1,7-octadiene. Of these other monomers, $\alpha$-olefins are preferable, and ethylene is particularly preferable.

One of these other monomers that can be addition copolymerized with a norbornene-based monomer may be used individually, or two or more of these other monomers that can be addition copolymerized with a norbornene-based monomer may be used in combination. In a case in which a norbornene-based monomer is addition copolymerized with another monomer that can be addition copolymerized therewith, appropriate selection is made such that, in the addition polymer, the proportions of structural units derived from the norbornene-based monomer and structural units derived from the other monomer that can be addition copolymerized are, as a weight ratio, normally in a range of 30:70 to 99:1, preferably in a range of 50:50 to 97:3, and more preferably in a range of 70:30 to 95:5.

Moreover, the method by which a hydrogenated cycloolefin polymer is produced through hydrogenation of a ring-opened polymer may be a method using a hydrogenation catalyst described in WO2010/110323A1, or the like, for example. For example, a hydrogenated cycloolefin polymer can be produced by using a ruthenium carbene complex catalyst such as described above as a ring-opening polymerization catalyst in order to produce a cycloolefin polymer and then also using the ruthenium carbene catalyst in that form as a hydrogenation catalyst in order to hydrogenate the cycloolefin polymer.

The weight-average molecular weight (Mw) of the cycloolefin polymer that can serve as a material of the shaped products and the joining layer is preferably 1,000 or more, more preferably 10,000 or more, and even more preferably 20,000 or more, and is preferably 1,000,000 or less, more preferably 500,000 or less, and even more preferably 200,000 or less. The number-average molecular weight (Mn) of the cycloolefin polymer that can serve as a material of the shaped products is preferably 1,000 or more, more preferably 3,000 or more, and even more preferably 5,000 or more, and is preferably 1,000,000 or less, more preferably 500,000 or less, and even more preferably 100,000 or less.

The weight-average molecular weight (Mw) and number-average molecular weight (Mn) of a cycloolefin polymer can be measured by a method described in the EXAMPLES section.

<Glass-transition temperature of shaped products and assembly>

A relationship between the glass-transition temperature of the shaped products ($Tg_1$; glass-transition temperature of resin component forming shaped products) and the glass-transition temperature of the joining layer ($Tg_2$; glass-transition temperature of resin component forming joining layer) preferably satisfies the following:

$$Tg_1 > Tg_2.$$

When the preceding relationship is satisfied, this means that by performing joining of the shaped products at a temperature that is higher than $Tg_2$ and lower than $Tg_1$ in production of the assembly, it is possible to cause softening of just the joining layer, and thereby enable joining through thermal fusion, without causing softening, deformation, or deterioration of the shaped products.

$Tg_1$ is preferably 125°C or higher, and more preferably 130°C or higher. Through $Tg_1$ being in a range such as set forth above, it is possible to inhibit softening, deformation, or deterioration of the shaped products due to heating (for example, autoclaving) during production of the assembly and optionally performed sterilization. Moreover, $Tg_1$ is preferably 180°C or lower, and more preferably 160°C or lower. Furthermore, in this case, the difference between $Tg_1$ and $Tg_2$ is preferably 10°C or more (i.e., $Tg_1 \geq Tg_2 + 10°C$), more preferably 15°C or more (i.e., $Tg_1 \geq Tg_2 + 15°C$), and even more preferably 20°C or more (i.e., $Tg_1 \geq Tg_2 + 20°C$). When there is a larger difference between $Tg_1$ and $Tg_2$, this makes it easier to set a heating temperature for causing softening of just the joining layer without causing softening, deformation, or deterioration of the shaped products in production of the assembly. Moreover, the difference between $Tg_1$ and $Tg_2$ is preferably 100°C or less, more preferably 90°C or less, and even more preferably 80°C or less. A smaller difference between $Tg_1$ and $Tg_2$ results in the joining layer having better temperature stability.

$Tg_2$ is preferably 50°C or higher, and more preferably 65°C or higher. Through $Tg_2$ being in a range such as set forth above, the joining layer has good temperature stability. Moreover, $Tg_2$ is preferably 130°C or lower, more preferably 110°C or lower, and even more preferably 100°C or lower. Through $Tg_2$ being in a range such as set forth above, it is easy to set a heating temperature for causing softening of just the joining layer in production of the assembly.

The glass-transition temperature referred to in the present disclosure can be measured by differential scanning calorimetry (DSC) based on JIS-K7121.

The glass-transition temperature (Tg) of the thermoplastic resin and the cycloolefin polymer can be adjusted as appropriate according to the type(s) and mixing ratio of monomer(s) used in polymerization, the average molecular weight and molecular weight distribution of the polymer, the glass-transition temperature (Tg) and mixing proportion of each polymer in the case of a polymer mixture, and so forth.

In the presently disclosed assembly, one or more of the assembly and the joining layer may be formed of two or more layers of differing Tg.

<Solvent component>

The assembly contains a solvent component having a boiling point in a specific range as a trace component. The joining layer of the assembly is typically formed in production of the assembly by applying, onto the surface of a shaped product, a joining agent that has the cycloolefin polymer that is the main material of the joining layer dissolved in a solvent, and performing drying treatment with respect to the applied joining agent so as to remove the majority of the solvent from the joining agent. The "solvent component" corresponds to solvent that remains as a trace component in the joining layer, etc. after the majority of the solvent has been removed from the joining agent. No specific limitations are placed on the "solvent component" so long as it is a substance that is used as a solvent of the cycloolefin polymer that is the main material of the joining layer and is a substance having a boiling point in a specific range. The solvent that constitutes the "solvent component" may be an individual solvent or may be a mixed solvent. In the case of a mixed solvent, the term "boiling point" refers to the boiling point of the mixed solvent. The boiling point of a mixed solvent can be adjusted based on the boiling point and mixing proportion of each solvent component. Examples of solvents that can be used as a component of the individual solvent or the mixed solvent include typically used organic solvents such as toluene (boiling point: 111°C), xylene (boiling point: 144°C), tetrahydrofuran (THF) (boiling point: 66°C), cyclohexane (boiling point: 80.3°C), methylcyclohexane (boiling point: 100.9°C), and ethylcyclohexane (boiling point: 132°C), for example, but are not limited to these solvents. Moreover, of these solvents, those that have a boiling point in a specific range can be used as an individual solvent. The "boiling point in a specific range" refers to a boiling point of not lower than 70°C and not higher than 150°C. It is normally necessary for the solvent to have a boiling that is not lower than the lower limit set forth above in order to display dissolving ability as a solvent. Moreover, it is normally necessary for the solvent to have a boiling point that is not higher than the upper limit set forth above in order to facilitate solvent removal by evaporation during production of the assembly. The solvent that constitutes the "solvent component" preferably includes at least one among cyclohexane, methylcyclohexane, ethylcyclohexane, xylene, and toluene.

When the assembly contains the solvent component as a trace component, this is thought to mean that the joining layer contains the solvent component as a trace component and that a certain degree of fluidity is imparted to the joining layer.

Consequently, as compared to a case in which the overall assembly including the joining layer is composed of only a resin component, excellent flexibility is imparted to the joining layer, and integrity with the shaped products is maintained even upon bending of the assembly. Moreover, excellent elasticity is imparted to the joining layer as compared to a case in which the joining layer is composed of only a resin component. Through effects of maintenance of integrity with the shaped products and excellent elasticity of the joining layer itself, it is possible to impart excellent flexural elastic modulus to the overall assembly.

Moreover, through the joining layer having a certain degree of fluidity, excellent adhesiveness is imparted to the joining layer, and excellent joint strength can be imparted between the shaped products in the assembly as compared to a case in which the joining layer is composed of only a resin component.

Furthermore, in a situation in which the assembly is subjected to autoclave sterilization and is then used, water vapor generated during the autoclave sterilization treatment tends to be taken in by resin, and the water vapor that is taken into the resin tends to remain and condense without diffusing inside of the resin, which may result in increased haze and reduction of transparency of the assembly. On the hand, by imparting a certain degree of fluidity to the joining layer as described above, this means that even when water vapor is taken into resin, condensation of the water vapor is suppressed and escape of the water vapor to outside of the resin is facilitated due to fluidity of the resin, and thus haze is reduced and excellent transparency can be imparted to the assembly.

«Proportional content of solvent component»

The assembly contains the solvent component in a specific trace concentration range. The specific trace concentration range, in terms of proportional content of the solvent component relative to the total mass of the assembly, is 100 mass ppm or more, preferably 1,050 mass ppm or more, and more preferably 110 mass ppm or more. Moreover, the specific trace concentration range, in terms of proportional content of the solvent component relative to the total mass of the joining layer, is 800 mass ppm or less, preferably 750 mass ppm or less, and more preferably 700 mass ppm or less.

When the proportional content of the solvent component relative to the total mass of the assembly is less than the lower limit set forth above, this means that the proportional content of the solvent component is extremely small relative to the total mass of the joining layer, and thus the joining layer becomes hard and brittle, peeling occurs during bending measurement, and the flexural elastic modulus decreases. Moreover, loss of fluidity of the joining layer results in water vapor that is taken into resin during autoclave sterilization treatment tending to remain in the resin without escaping to outside of the resin, increased haze, and loss of transparency of the assembly.

On the other hand, when the proportional content of the solvent component relative to the total mass of the assembly exceeds the upper limit set forth above, this means that the proportional content of the solvent component will also be excessive relative to the total mass of the joining layer, resulting in excessive softening of the joining layer, and making it more likely that the flexural elastic modulus of the overall assembly will decrease.

For the reasons given above, setting the proportional content of the solvent component in a specific trace concentration range relative to the total mass of the joining layer makes it possible to provide an assembly that has excellent joint strength and flexural elastic modulus and that also has excellent transparency after autoclave sterilization treatment of the assembly. The proportional content of a solvent component can be measured by a method described in the EXAMPLES section, for example.

<Thickness of assembly>

The thickness of the assembly (thickness in a stacking direction when the assembly is regarded as a laminate of the shaped products and the joining layer) is not specifically limited, but may be 1 mm or more, preferably 2 mm or more, and more preferably 3 mm or more, for example, and may be 201 mm or less, preferably 101 mm or less, and more preferably 41 mm or less, for example.

The presently disclosed assembly can be manufactured by the presently disclosed method for manufacturing an assembly described below, for example.

(Method for manufacturing assembly)

A feature of the presently disclosed method for manufacturing an assembly is that it includes the following steps:

(i) a step (joining agent application step) of applying a joining agent containing at least one type of cycloolefin and a solvent component having a boiling point in a specific range onto at least one surface of a first shaped product having a thermoplastic resin as a material;
(ii) a step (joining layer formation step) of performing drying treatment of the joining agent that has been applied to remove a majority of the solvent component from the joining agent and form a joining layer on the surface of the first shaped product;
(iii) a step (joining step) of arranging a second shaped product having a thermoplastic resin as a material in contact with the joining layer and performing heating and pressing treatment to join the first shaped product and the second shaped product via the joining layer and obtain an assembly containing the solvent component in a specific trace concentration range.

The boiling point in a specific range is required to be not lower than 70°C and not higher than 150°C. The specific trace concentration range is required to be not less than 100 mass ppm and not more than 800 mass ppm relative to the total mass of the assembly. By forming a joining layer using a joining agent that contains at least one type of cycloolefin and a solvent component having a boiling point of not lower than 70°C and not higher than 150°C and by setting the content of the solvent component in an assembly in a specific trace concentration range, it is possible to manufacture an assembly that has excellent joint strength and flexural elastic modulus and that also has excellent transparency after autoclave sterilization treatment of the assembly.

The assembly that is obtained through the presently disclosed method for manufacturing an assembly has a structure in which the first shaped product and the second shaped product are joined via the joining layer. When an assembly in which three or more shaped products are stacked is to be manufactured, the formation of an additional joining layer on at least one of the first shaped product and the second shaped product and the stacking and joining of an additional shaped product may be performed once or more.

<Step (i): Joining agent application step>

In step (i) (joining agent application step), a joining agent that contains at least one type of cycloolefin and a solvent component having a boiling point in a specific range is applied onto at least one surface of a first shaped product having a thermoplastic resin as a material.

<<Joining agent>>

The "joining agent" is a coating liquid that is applied onto the first shaped product in step (i) in order to form a joining layer. The joining agent contains at least one type of cycloolefin and a solvent component having a boiling point in a specific range. The cycloolefin and solvent component that are components of the joining layer are used as the cycloolefin and solvent component that are components of the joining agent. No specific limitations are placed on the proportional content of the cycloolefin in the joining agent so long as it is in a range that results in the proportional content of the solvent component in the assembly that is obtained by this manufacturing method being in the specific trace concentration range described above (i.e., not less than 100 mass ppm and not more than 800 mass ppm). Moreover, among such proportional contents, a proportional content that results in the formation of a joining layer having a thickness in any of the previously described preferred ranges (for example, not less than 0.1 $\mu$m and not more than 5 $\mu$m) in step (ii) is preferable. The proportional content of the cycloolefin in the joining agent is preferably 0.5 mass% or more, more preferably 1 mass% or more, and even more preferably 2 mass% or more, and is preferably 50 mass% or less, more preferably 40 mass% or less, and even more preferably 30 mass% or less. It is preferable that the proportional content of the cycloolefin in the joining agent is not excessively low in order to facilitate removal of the solvent component through drying treatment. Moreover, it is preferable that the proportional content of the cycloolefin in the joining agent is not excessively high in order to impart sufficient solubility to the joining agent and increase uniformity and ease of application.

<<Application of joining agent>>

The application method of the joining agent is not specifically limited and may be bar coating, silk screen printing, spin coating, spray coating, wet coating, gravure coating, or the like, for example.

<Step (ii): Joining layer formation step>

In step (ii) (joining layer formation step), drying treatment is performed with respect to the joining agent that has been applied to remove the majority of the solvent component from the joining agent and form a joining layer on the surface of the first shaped product.

<<Drying treatment>>

No specific limitations are placed on conditions of the drying treatment so long as they are conditions that result in the proportional content of the solvent component in the assembly that is obtained by this manufacturing method being in the specific trace concentration range described above (i.e., not less than 100 mass ppm and not more than 800 mass ppm). Moreover, among such drying treatment conditions, a proportional content that results in the formation of a joining layer having a thickness in any of the previously described preferred ranges (for example, not less than 0.1 $\mu$m and not more than 5 $\mu$m) is preferable.

The drying treatment may be performed through drying (for example, heated drying or room temperature drying), heated vacuum (reduced pressure) drying, or a combination thereof at a temperature that is lower than the glass-transition temperature of the cycloolefin polymer serving as a material of the joining layer, for example. The device that performs the drying treatment is not specifically limited and may be an oven (for example, an inert gas hot-air oven), a vacuum dryer, a hot-air drying furnace, or the like, for example.

The temperature at which the drying treatment is performed is preferably at least 10°C lower than the glass-transition temperature ($Tg_1$) of the first shaped product. For example, the temperature at which the drying treatment is performed is preferably 60°C or higher, more preferably 65°C or higher, and even more preferably 70°C or higher, and is preferably 128°C or lower, more preferably 125°C or lower, and even more preferably 122°C or lower. The time for which the drying treatment is performed is not specifically limited so long as it is in a range that enables sufficient drying. However, since an excessively long time may result in increased industrial cost, progression of resin oxidation, and, in extreme cases, the occurrence of yellowing, the time for which the drying treatment is performed is, for example, preferably 1 second or more, more preferably 10 seconds or more, and even more preferably 30 seconds or more, and is preferably 55 minutes or less, more preferably 50 minutes or less, and even more preferably 40 minutes or less. The atmosphere in which the drying treatment is performed may be in the presence of air, in the presence of an inert gas, under vacuum, or the like, for example. From a viewpoint of inhibiting degradation of components of the first shaped product and the joining layer due to the drying treatment and performing solvent removal gently such that the formation of cavities in the joining layer is inhibited, it is preferable that the drying treatment is performed in the presence of an inert gas. The inert gas may be a noble gas (for example, helium, neon, argon, krypton, or xenon), nitrogen gas, or the like, for example.

<Step (iii): Joining step>

In step (iii) (joining step), a second shaped product having a thermoplastic resin as a material is arranged in contact with the joining layer, and heating and pressing treatment is performed to join (thermally fuse) the first shaped product and the second shaped product via the joining layer. When arranging the second shaped product, the first shaped product and the second shaped product may be temporarily fixed in an arrangement with the joining layer in-between to form a temporarily fixed assembly. After the heating and pressing treatment, an assembly can be obtained through cooling to room temperature.

<<Heating and pressing treatment>>

The means by which thermal fusion is performed through the heating and pressing treatment is not specifically limited and may be autoclaving, hot pressing, roll pressing, or the like, for example. In a case in which an autoclave is used, a vacuum package obtained through vacuum packaging of the temporarily fixed assembly may be treated in the autoclave. The vacuum packaging may be vacuum packaging using a retort packaging material, for example. Note that although it is preferable that trapped air is released from the temporarily fixed assembly and that pressure bonding is performed prior to the heating and pressing treatment, a small amount of bubbles will diffuse during autoclaving, and thus a problem does not arise unless a large amount of air is trapped.

The conditions under which the heating and pressing treatment is performed are not specifically limited so long as they are conditions under which the shaped products and the joining layer are joined (thermally fused). The temperature at which the heating and pressing treatment is performed is preferably a temperature that is higher than the glass-transition temperature ($Tg_2$) of the joining layer and that is lower than the glass-transition temperature ($Tg_1$) of both the first shaped product and the second shaped product. The temperature at which the heating and pressing treatment is performed is preferably $Tg_2$ + 5°C or higher, and more preferably $Tg_2$ + 10°C or higher. Moreover, the temperature at which thermal fusion is performed is preferably $Tg_2$ + 50°C or lower, and more preferably $Tg_2$ + 40°C or lower. The temperature at which the heating and pressing treatment is performed is preferably 100°C or higher, more preferably 105°C or higher, and even more preferably 110°C or higher, and is preferably 140°C or lower, more preferably 135°C or lower, and even more preferably 130°C or lower, for example. The pressing pressure at which the heating and pressing treatment is performed is preferably 0.4 MPa or higher, more preferably 0.5 MPa or higher, and even more preferably 0.6 MPa or higher, and is preferably 1.2 MPa or lower, more preferably 1.1 MPa or lower, and even more preferably 1.0 MPa or lower, for example. The time for which the heating and pressing treatment is performed is preferably 10 minutes or more, more preferably 15 minutes or more, and even more preferably 18 minutes or more, and is preferably 60 minutes or less, more preferably 50 minutes or less, and even more preferably 40 minutes or less, for example. The amount of solvent in the assembly that is ultimately obtained through this manufacturing method can be adjusted through drying conditions in step (ii) and heating and pressing treatment conditions in step (iii).

EXAMPLES

The following provides a more specific description of the present disclosure based on examples. However, the present disclosure is not limited to the following examples.

(Methods for measuring and evaluating physical properties)

Measurements and evaluations of various physical properties were performed according to the following methods.

<Method for measuring weight-average molecular weight (Mw) and number-average molecular weight (Mn) of COP>

The weight-average molecular weight (Mw) and number-average molecular weight (Mn) of a cycloolefin polymer (COP) were determined as standard polyisoprene-equivalent values through measurement by gel permeation chromatography (GPC) with cyclohexane as an eluent. Standard polyisoprene produced by Tosoh Corporation was used as the standard polyisoprene. In a case in which the sample did not dissolve in cyclohexane, the weight-average molecular weight (Mw) and number-average molecular weight (Mn) were determined as standard polystyrene-equivalent values through measurement by GPC with tetrahydrofuran (THF) as an eluent. Standard polystyrene produced by Tosoh Corporation was used as the standard polystyrene.

<Method for measuring glass-transition temperature of COP>

The glass-transition temperature (Tg) of a cycloolefin polymer (COP) was measured based on JIS-K7121 using a differential scanning calorimeter (produced by Nanotechnology; product name: DSC6220SII) under a condition of a heating rate of 10°C/min.

<Type and proportional content of solvent component in COP: HS gas chromatography>

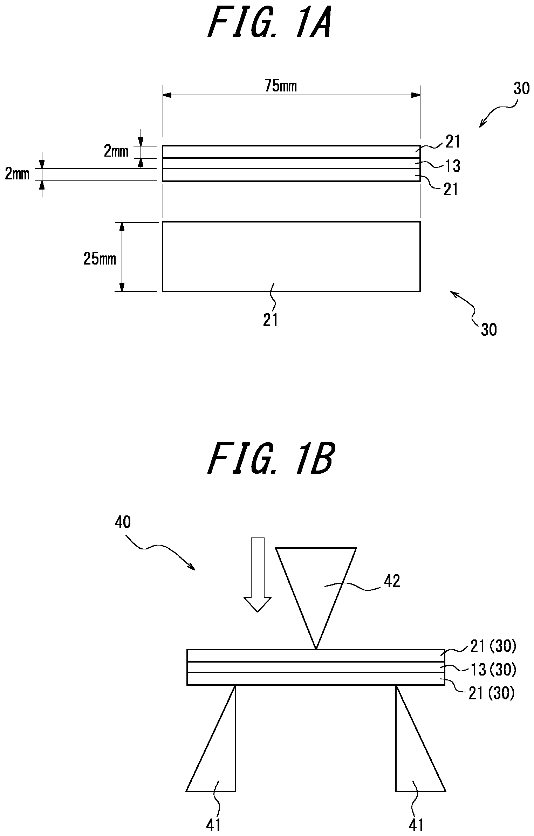

A fully joined assembly (FIG. 1A) was cut to 3 mm × 3 mm to obtain a test specimen. The weight of the test specimen was measured, and the test specimen was loaded into a headspace vial. An empty headspace vial was subjected to measurement as an "operation blank", and a headspace vial in which a reference standard for conversion quantification (toluene-d8: 0.314 μg (10.5 μg/ml, 30 μL)) had been added was subjected to measurement as a "reference standard".

A TurboMatrix 40 Trap (produced by PerkinElmer, Inc.), a GCMS-QP2020 (produced by Shimadzu Corporation), and a TC-BOND Q column (0.25 mm I.D. × 30 m, 8 μm; produced by GL Sciences) were used as a measurement apparatus, and detection was performed in carrier gas:helium with a column temperature of 40°C (4 min) -> 240°C (26 min) and a heating rate of 10°C/min.

<Thickness of joining layer>

The thickness of a joining layer was measured using a fully joined assembly (FIG. 1A).

In a case in which the thickness was 0.5 μm or more, a thickness meter (HKT-Lite 0.1 produced by Fujiwork Co., Ltd.) was used to measure the same location on a shaped product before and after application, and then the thickness (dry thickness) of the joining layer was measured by subtracting the thickness before application from the thickness after application.

In a case in which the thickness was less than 0.5 μm, the thickness (dry thickness) of the joining layer was measured by cutting a cross-section from a shaped product after drying using a microtome. The obtained cross-sectional piece was subjected to platinum sputtering and was then subjected to cross-sectional observation using a scanning electron microscope (S-3400N produced by Hitachi High-Tech Corporation) to measure the thickness of the joining layer.

<Flexural elastic modulus: Three-point bending measurement>

Using a tension/compression load cell (capacity ± 100 kN) in a universal material testing machine (Instron 5582 produced by Instron Corporation), a three-point bending jig was set up, a fully joined assembly 30 of width (b) and thickness (h) that had been joined as illustrated in FIG. 1A was set on two supporting points 41 of the material testing machine 40 as illustrated in FIG. 1B, a central part of the fully joined assembly 30 was pressed from above by a pressing jig 42 (distance between supporting points (L): 55 mm; pressing rate: 5 mm/min), and the flexural elastic modulus was calculated from the initial gradient of a straight line part of a bending load-deflection curve.

[Math. 1]

$$\text{Flexural elastic modulus E} \quad = \quad \frac{L^3}{4bh^3} \times \frac{\Delta F}{\Delta s}$$

ΔF: Change of bending load
Δs: Change of deflection

The change was determined by taking 2 arbitrary points using a close race.

<Joint strength: Three-point bending measurement>

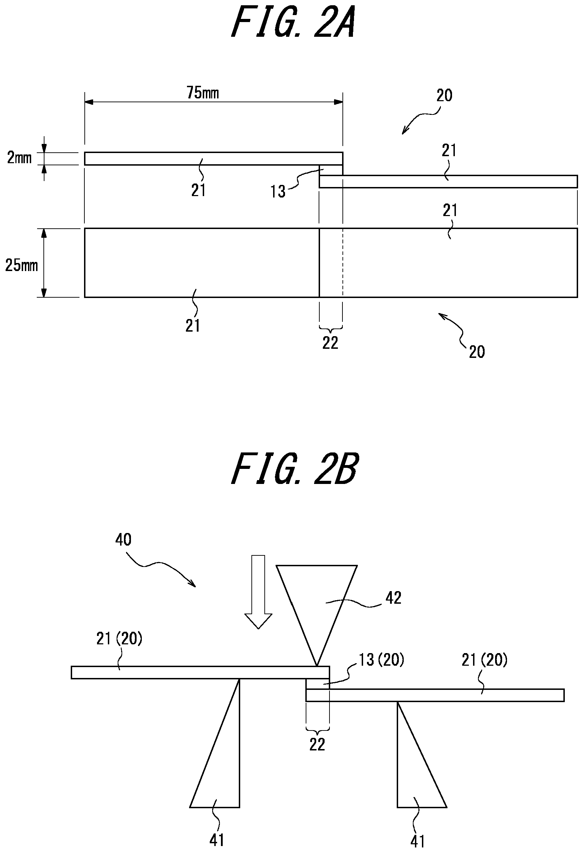

Using a tension/compression load cell (capacity ± 100 kN) in a universal material testing machine (Instron 5582 produced by Instron Corporation), a three-point bending jig was set up, a joint strength measurement assembly 20 that had been joined as illustrated in FIG. 2A was set on two supporting points 41 of the material testing machine 40 as illustrated in FIG. 2B, a central part (overlap margin 22) of the joint strength measurement assembly 20 was pressed from above by a pressing jig 42 (distance between supporting points: 38 mm; pressing rate: 10 mm/min), and the strength at breaking was determined.

<Transparency after autoclave treatment for sterilization (haze)> «Autoclave treatment for sterilization: Hygrothermal pressurized autoclaving»

A fully joined assembly sample was set against a fixing jig made of SUS, was inserted into an autoclave (SX-700 produced by Tomy Seiko Co., Ltd.), and was subjected to sterilization treatment at 121°C and 1.2 atm for 15 minutes. The assembly sample was removed at a stage once the inside of the autoclave reached 40°C or lower and was air dried at room temperature.

«Haze measurement»

The assembly sample was measured using a haze meter (NDH-700SP produced by Nippon Denshoku Industries Co., Ltd.).

(1. Production of cycloolefin polymers (COPs))

Cycloolefin polymers (COPs) used as materials of shaped products (injection molded plates) and joining layers were produced by the following methods.

<Production of COP-1>

-Production of ring-opened polymer-

At room temperature, 200 parts by mass of dehydrated cyclohexane, 0.75 mol% of 1-hexene, 0.15 mol% of diisopropyl ether, and 0.44 mol% of triisobutylaluminum relative to 100 parts by mass, in total, of subsequently described monomers were loaded into a glass reactor that had been internally purged with nitrogen and were mixed. Thereafter, 33 parts by mass of dicyclopentadiene (DCPD), 36 parts by mass of norbornene (NB), and 31 parts by mass of tetracyclododecene (TCD) as monomers and 0.02 mol% of tungsten hexachloride (0.65 weight% toluene solution) were continuously added into the reactor over 2 hours, concurrently to one another, and polymerization was performed while maintaining a temperature of 45°C. Next, 0.2 mol% of isopropyl alcohol was added to the polymerization solution so as to deactivate the polymerization catalyst and stop the polymerization reaction. Note that amounts given in units of "mol%" in the preceding description are each a value for when the total amount of monomers is taken to be 100 mol%.

-Production of norbornene-based cycloolefin polymer (COP-1) by hydrogenation-

Next, 300 parts by mass of a reaction solution containing the ring-opened polymer obtained as described above was transferred to a stirrer-equipped autoclave, 3 parts by mass of nickel catalyst loaded on diatomaceous earth (T8400RL produced by JGC C&C; nickel loading rate: 57%) was added, and a hydrogenation reaction was performed through 4 hours of autoclaving at a hydrogen pressure of 4.5 MPa and a temperature of 160°C.

Once the hydrogenation reaction had ended, the resultant solution was subjected to pressurized filtering (FUNDABAC Filter produced by Ishikawajima-Harima Heavy Industries Co., Ltd.) at a pressure of 0.25 MPa using Radiolite #500 as a filter bed so as to remove the hydrogenation catalyst and thereby obtain a colorless and transparent solution. The obtained solution was poured into a large amount of isopropanol to cause precipitation of a norbornene-based cycloolefin polymer (COP-1) as a hydrogenated ring-opened polymer. The norbornene-based cycloolefin polymer (COP-1) that precipitated was collected by filtration and was subsequently dried by a vacuum dryer (220°C, 1 Torr) for 6 hours to yield the norbornene-based cycloolefin polymer (COP-1). The norbornene-based cycloolefin polymer (COP-1) had a weight-average molecular weight (Mw) of 41,500 and a number-average molecular weight (Mn) of 13,500.

The glass-transition temperature (Tg) of the obtained norbornene-based cycloolefin polymer (COP-1) was 68°C.

-Production of thermoplastic norbornene-based resin pellets-

The norbornene-based cycloolefin polymer (COP-1) obtained as described above was loaded into a twin-screw extruder and was molded into the form of a strand-like molded product by hot-melt extrusion. This molded product was finely cut using a strand cutter to obtain pellets of a thermoplastic norbornene-based resin that contained the norbornene-based cycloolefin polymer (COP-1).

<Production of COP-2>

A norbornene-based cycloolefin polymer (COP-2) was synthesized and pellets of a thermoplastic norbornene-based resin containing the COP-2 were obtained in the same way as in production of the COP-1 with the exception that 38.2 parts by mass of dicyclopentadiene (DCPD), 26.8 parts by mass of methanotetrahydrofluorene (MTF), and 35 parts by mass of tetracyclododecene (TCD) were used as monomers. The COP-2 had a weight-average molecular weight (Mw) of 33,000 and a number-average molecular weight (Mn) of 15,500. The glass-transition temperature Tg of the COP-2 was 138°C.

<Production of COP-3>

A norbornene-based cycloolefin polymer (COP-3) was synthesized and pellets of a thermoplastic norbornene-based resin containing the COP-3 were obtained in the same way as in production of the COP-1 with the exception that 60 parts by mass of methanotetrahydrofluorene (MTF) and 40 parts by mass of tetracyclododecene (TCD) were used as monomers. The COP-3 had a weight-average molecular weight (Mw) of 32,000 and a number-average molecular weight (Mn) of 19,000. The glass-transition temperature Tg of the COP-3 was 159°C.

<Production of COP-4>

A norbornene-based cycloolefin polymer (COP-4) was synthesized and pellets of a thermoplastic norbornene-based resin containing the COP-4 were obtained in the same way as in production of the COP-1 with the exception that 100 parts by mass of ethylidene tetracyclododecene (ETD) was used as a monomer. The COP-4 had a weight-average molecular weight (Mw) of 40,000 and a number-average molecular weight (Mn) of 19,500. The glass-transition temperature Tg of the COP-4 was 138°C.

(2. Production of shaped products (injection molded plates))

Injection molded plates (injection molded plate A and injection molded plate B) having a shaped product resin indicated in Table 1 as a material were produced as shaped products for use in Examples 1 to 10 and Comparative Examples 1 to 10 by installing a mold for molding a flat plate of 2 mm in thickness by 25 mm in width by 75 mm in length in an injection molding machine (ROBOSHOT S2000i100A produced by FANUC Corporation) and performing injection molding with a mold temperature of 80°C and a barrel temperature of 270°C. The injection molded plates each had a flat plate shape of 2 mm in thickness by 25 mm in width by 75 mm in length. Plates for fully joined assembly production and for joint strength measurement were each produced as the injection molded plates A and B. Note that in Examples 1 to 6 and 8 and Comparative Examples 1 to 10, the injection molded plate A and the injection molded plate B were produced using the same type of resin. In a case in which a COP (COP-2, COP-3) was used as a resin, resin pellets serving as a shaped product resin were used after 5 hours of drying at a temperature of Tg - 20°C. In a case in which polymethyl methacrylate (PMMA) was used as a resin (Example 10), an injection molded plate that had undergone corona discharge treatment after molding was used.

-Corona discharge treatment-

Corona discharge treatment was performed as follows for an injection molded plate B having PMMA as a material that was used in Example 10. Using a table-type corona discharge treatment device (CTW-0212 produced by Wedge Co., Ltd.), the shaped product was set on an operation table and was subjected to one round of corona discharge treatment with a power of 0.3 kW, a treatment rate of 3 m/min, and an interelectrode distance of 12 mm. After the corona discharge treatment, the shaped product was removed and was subjected to static elimination treatment using an ionizer.

(3. Formation of joining layer)

<Preparation of joining agent>

Joining agents used in Examples 1 to 10 and Comparative Examples 1 to 10 were prepared as follows. A solvent and resin (COP) pellets indicated in Table 1 were measured into a hermetic vessel. The hermetic vessel was hermetically sealed and was then shaken by a shaker (MMS-1020 produced by Tokyo Rikakiki Co., Ltd.) at 25°C and 100 rpm for 4 hours to cause dissolution of the resin in the solvent. After dissolution, the solution was filtered, and the filtrate was collected as a joining agent (coating solution).

<Application of joining agent>

For production of a fully joined assembly, the joining agent prepared as described above was applied over the whole surface (surface of 25 mm in width by 75 mm in length; hereinafter referred to as a "coating surface") at one side of an injection molded plate A. Moreover, for a joint strength measurement assembly, the joining agent prepared as described above was applied onto a surface at one side of an injection molded plate A in a region (hereinafter, referred to as an "overlap margin") up to 5 mm from the end of a short side of the surface. Application of the joining agent was performed by bar coating, silk screen printing, or spin coating as indicated in Table 1.

-Bar coating-

Coating onto the coating surface of the injection molded plate A was performed by using a Mayer bar (wire bar; produced by Marukyo Giken) to scrape off the joining agent. The injection molded plate A onto which the joining agent had been applied was removed, was placed in a drying oven, and was subjected to drying treatment with a specific temperature and time as described below.

-Silk screen printing-

An SUS screen mesh (500 mesh; thread diameter: 18 $\mu$m; opening size: 29 $\mu$m; produced by SONOCOM Co., Ltd.) was installed in a tabletop screen printing machine (HP-320 produced by Newlong Seimitsu Kogyo Co., Ltd.). The injection molded plate A was set on a suction fixing stage and was fixed in place by suction. The joining agent was dripped onto the SUS screen mesh and was scraped off using a squeegee so as to apply a specific amount of the joining agent onto the coating surface of the injection molded plate A. After application, the suction attachment was stopped, the injection molded plate onto which the joining agent had been applied was removed, and then the injection molded plate was placed in a drying oven and was subjected to drying treatment with a specific temperature and time as described below.

-Spin coating-

Using a spin coater (ACT-220DII produced by Active, Ltd.), the injection molded plate was fixed in place by suction inside of a chamber, and 5 mL of the joining agent was dripped onto the center of the coating surface of the injection molded plate A. The chamber was then closed, and spin coating was performed at room temperature at 2,000 rpm. Once the coating was complete, the suction fixing was stopped, the injection molded plate A onto which the joining agent had been applied was removed, and then the injection molded plate A was placed in a drying oven and was subjected to drying treatment with a specific temperature and time as described below.

<Drying treatment>

A sample that had undergone application was placed inside of a compact inert gas oven (KLO-30NH produced by Koyo Thermo Systems Co., Ltd.) and was subjected to drying treatment with a specific temperature and time indicated in Table 1 so as to remove solvent from the applied joining agent and form a joining layer on the coating surface of the injection molded plate A (over the whole surface for production of a fully joined assembly and in the overlap margin for joint strength measurement).

(4. Production of assembly test specimen through joining of shaped products (injection molded plates))

An injection molded plate B was joined to the injection molded plate A on which the joining layer had been formed so as to produce an assembly test specimen in which the injection molded plate A and the injection molded plate B were joined via the joining layer. Both a fully joined assembly (FIG. 1A) and a joint strength measurement assembly (FIG. 2A) were produced as assembly test specimens. The joining was performed by autoclaving (air heating and pressing) treatment.

<Autoclaving (air heating and pressing) treatment for joining>

In the case of a fully joined assembly (FIG. 1A), an injection molded plate A having a joining layer formed over the whole coating surface and an injection molded plate B not having the joining agent applied thereon were overlapped in an orientation such as to be in contact via the joining layer at a position where the injection molded plates fully overlapped and were temporarily fixed to obtain a temporarily fixed assembly. In the case of a joint strength measurement assembly (FIG. 2A), an injection molded plate A having a joining layer formed in the overlap margin of the coating surface and an injection molded plate B not having the joining agent applied thereon were overlapped in an orientation such as to be in contact via the joining layer at a position where the injection molded plates overlapped at the overlap margin and were temporarily fixed to obtain a temporarily fixed assembly.

The temporarily fixed assembly was subjected to vacuum packaging in a retort packaging material using a vacuum packaging machine (T100 produced by Nippon Hoso-Kikai Co., Ltd.). The vacuum package was then loaded into an autoclave (DANDELION DL-2010 produced by Hanyuda Co., Ltd.) and was subjected to heating and pressing with a temperature of 120°C, a pressure of 0.8 MPa, and a pressing time of 30 minutes so as to join the injection molded plate A and the injection molded plate B via the joining layer and thereby form an assembly test specimen. Once the autoclaving was complete, the vacuum package was cooled to room temperature, and the assembly (fully joined assembly or joint strength measurement assembly) was removed.

As illustrated in FIG. 1A, the fully joined assembly 30 was an assembly in which an injection molded plate A (21) and an injection molded plate B (21) were joined via a joining layer 13 at a position where the injection molded plates fully overlapped. As illustrated in FIG. 2A, the joint strength measurement assembly 20 was an assembly in which an injection molded plate A (21) and an injection molded plate B (21) were joined via a joining layer 13 in an overlap margin 22 (overlap margin where the injection molded plates overlapped with one another) up to 5 mm from the end of a short side.

<Various measurements and evaluations>

The extracted amount of solvent, the transparency after autoclave treatment for sterilization (haze), and the flexural elastic modulus were measured for the fully joined assembly (FIG. 1A). The joint strength was measured for the joint strength measurement assembly (FIGS. 2A and 2B). The results are shown in Table 1.

[Table 1-1]

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Assembly manufacture method | Joining agent composition | Solvent (ratio) | Cyclohexane (90 wt%) | Cyclohexane (85 wt%) | Cyclohexane (97 wt%) | Methyl cyclohexane (90 wt%) | Ethyl cyclohexane (90 wt%) | Xylene (80 wt%) | Cyclohexane (90 wt%) | Cyclohexane: Toluene (8:2) (90 wt%) | Cyclohexane (90 wt%) | Cyclohexane (90 wt%) |
| | | Cycloolefin resin (ratio) | COP-1 (Tg 68°C) (10 wt%) | COP-1 (Tg 68°C) (12 wt%) COP-4 (Tg 138°C) (3 wt%) | COP-1 (Tg 68°C) (3 wt%) | COP-1 (Tg 68°C) (10 wt%) | COP-1 (Tg 68°C) (10 wt%) | COP-1 (Tg68°C) (20 wt%) | COP-1 (Tg68°C) (10 wt%) | COP-1 (Tg68°C) (10 wt%) | COP-1 (Tg68°C) (10 wt%) | COP-1 (Tg 68°C) (10 wt%) |
| | Shaped product A | All 2 mm thickness | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) |
| | Shaped product B | All 2 mm thickness | Same as above | Same as above | Same as above | Same as above | Same as above | Same as above | COP-3 (Tg 159°C) | Same as above | Polycarbonate | PMMA (corona treatment) |
| | Joining layer thickness (dry) | | 2 μm | 2 μm | 0.5 μm | 2 μm | 1 μm | 3.0 μm | 2 μm | 2 μm | 2 μm | 2 μm |
| | Application method | | Applied onto shaped product A with No. 8 Mayer bar | Applied onto shaped product A with No. 8 Mayer bar | Applied onto shaped product A with No. 8 Mayer bar | Applied onto shaped product A with No. 8 Mayer bar | Applied onto shaped product A by spin coating | Applied onto shaped product A with silk screen | Applied onto shaped product A with No. 8 Mayer bar | Applied onto shaped product A with No. 8 Mayer bar | Applied onto shaped product A with No. 8 Mayer bar | Applied onto shaped product A with No. 8 Mayer bar |
| | Drying method | | 90°C hot-air oven 30 min | 100°C hot-air oven 30 min | 90°C hot-air oven 30 min | 100°C hot-air oven 30 min | 120°C hot-air oven 30 min | 120°C hot-air oven 30 min | 90°C hot-air oven 30 min | 90°C hot-air oven 30 min | 90°C hot-air oven 30 min | 75°C hot-air oven 30 min |

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | Joining method | Autoclave 120°C 0.8 MPa 30 min | Autoclave 120°C 0.8 MPa 30 min | Autoclave 120°C 0.8 MPa 30 min | Vacuum laminator 120°C 0.1 MPa 20 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min |
| Evaluations | Proportional content of solvent component relative to total mass of assembly (ppm) | 120 | 120 | 140 | 200 | 210 | 600 | 120 | 270 | 120 | 230 |
| | Transparency after autoclave sterilization of assembly (haze) | 1.2 | 1.2 | 1.2 | 1.2 | 1.2 | 1.3 | 1.2 | 1.2 | 1.5 | 1.2 |
| | Flexural elastic modulus of assembly (GPa) | 3.3 | 3.3 | 3.3 | 3.3 | 3.3 | 3.3 | 3.3 | 3.3 | 3.4 | 3.6 |
| | Joint strength (N) | 165 | 165 | 160 | 170 | 160 | 170 | 168 | 170 | 75 | 80 |

EP 4 501 628 A1

[Table 1-2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Joining agent composition | Solvent (ratio) | Cyclohexane (90 wt%) | Cyclohexane (85 wt%) | Cyclohexane (80 wt%) | Cyclohexane (80 wt%) | Xylene (80 wt%) | Xylene (85 wt%) | Xylene (80 wt%) | Ethyl cyclohexane (95 wt%) | Cyclohexane (99 wt%) | Cyclohexane (75 wt%) |
| | Cycloolefin resin (ratio) | COP-1 (Tg68°C) (10 wt%) | COP-1 (Tg68°C) (15 wt%) | COP-1 (Tg68°C) (20 wt%) | COP-1 (Tg68°C) (20 wt%) | COP-1 (Tg68°C) (20 wt%) | COP-1 (Tg68°C) (20 wt%) | COP-1 (Tg68°C) (20 wt%) | COP-1 (Tg68°C) (5 wt%) | COP-1 (Tg68°C) (1 wt%) | COP-1 (Tg68°C) (25 wt%) |
| Shaped product A | All 2 mm thickness | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) | COP-2 (Tg 138°C) |
| Shaped product B | All 2 mm thickness | Same as above | Same as above | Same as above | Same as above | Same as above | Same as above | Same as above | Same as above | Same as above | Same as above |
| Joining layer thickness (dry) | | 2 μm | 3.0 μm | 3.5 μm | 3.5 μm | 3.5 μm | 3.0 μm | 3.0 μm | 1 μm | 0.05 μm | 7 μm |
| Assembly manufacture method | Application method | Applied onto shaped product A with No. 8 Mayer bar | Applied onto shaped product A with silk screen | Applied onto shaped product A with No. 8 Mayer bar | Applied onto shaped product A with No. 8 Mayer bar | Applied onto shaped product A with No. 8 Mayer bar | Applied onto shaped product A with silk screen | Applied onto shaped product A with silk screen | Applied onto shaped product A with No. 8 Mayer bar | Applied onto shaped product A by spin coating | Applied onto shaped product A with No. 14 Mayer bar |
| | Drying method | 120°C hot-air oven 30 min | 110°C hot-air oven 30 min | 80°C hot-air oven 5 min | 80°C hot-air oven 60 min | 120°C hot-air oven 5 min | 150°C hot-air oven 30 min | 90°C hot-air oven 30 min | 60°C hot-air oven 1 min | 90°C hot-air oven 30 min | 90°C hot-air oven 30 min |
| | Joining method | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min | Autoclave 120°C 0.8 MPa 30 min |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Evaluations | Proportional content of solvent component relative to total mass of assembly (ppm) | 45 | 55 | 970 | 60 | 1000 | 80 | 1100 | 1500 | 70 | 980 |
| | Transparency after autoclave sterilization of assembly (haze) | 3.5 | 3.6 | 1.4 | 3.5 | 1.3 | 3.6 | 1.3 | 1.2 | 3.2 | 1.2 |
| | Flexural elastic modulus of assembly (GPa) | 2.8 | 2.8 | 2.6 | 2.8 | 2.7 | 2.8 | 2.8 | Not measurable due to peeling | Not measurable due to peeling | 2.8 |
| | Joint strength (N) | 150 | 160 | 165 | 160 | 150 | 148 | 145 | 28 | 20 | 157 |

INDUSTRIAL APPLICABILITY

According to the present disclosure, it is possible to provide an assembly having excellent flexural elastic modulus and joint strength and having suppressed reduction of transparency due to increased haze in the presence of water vapor generation and also to provide a method for manufacturing the same.

REFERENCE SIGNS LIST

13    joining agent
20    joint strength measurement assembly
21    shaped product
22    overlap margin
30    fully joined assembly
40    material testing machine
41    supporting point
42    pressing jig

**Claims**

1.  An assembly comprising:

    a plurality of shaped products having a thermoplastic resin as a material; and
    a joining layer joining the shaped products to one another, wherein
    the joining layer contains at least one type of cycloolefin polymer and a solvent component having a boiling point of not lower than 70°C and not higher than 150°C, and
    the assembly contains not less than 100 mass ppm and not more than 800 mass ppm of the solvent component having a boiling point of not lower than 70°C and not higher than 150°C relative to total mass of the assembly.

2.  The assembly according to claim 1, wherein the joining layer has a thickness of not less than 0.1 $\mu$m and not more than 5 $\mu$m.

3.  The assembly according to claim 1 or 2, wherein the thermoplastic resin is a resin that contains a cycloolefin polymer.

4.  The assembly according to any one of claims 1 to 3, wherein the solvent component includes at least one among cyclohexane, methylcyclohexane, ethylcyclohexane, xylene, and toluene.

5.  A method for manufacturing the assembly according to any one of claims 1 to 4, comprising:

    applying a joining agent containing at least one type of cycloolefin and a solvent component having a boiling point of not lower than 70°C and not higher than 150°C onto at least one surface of a first shaped product having a thermoplastic resin as a material;
    performing drying treatment of the joining agent that has been applied to remove a majority of the solvent component from the joining agent and form a joining layer on the surface of the first shaped product; and
    arranging a second shaped product having a thermoplastic resin as a material in contact with the joining layer and performing heating and pressing treatment to join the first shaped product and the second shaped product via the joining layer and obtain an assembly containing not less than 100 mass ppm and not more than 800 mass ppm of the solvent component relative to total mass of the assembly.

# FIG. 1A

# FIG. 1B

# FIG. 2A

# FIG. 2B

## INTERNATIONAL SEARCH REPORT

International application No.

**PCT/JP2023/007911**

### A. CLASSIFICATION OF SUBJECT MATTER

*B32B 27/00*(2006.01)i; *B29C 65/48*(2006.01)i; *B32B 7/12*(2006.01)i; *C09J 5/06*(2006.01)i; *C09J 123/02*(2006.01)i
FI: B32B27/00 C; B32B7/12; B29C65/48; C09J123/02; C09J5/06

According to International Patent Classification (IPC) or to both national classification and IPC

### B. FIELDS SEARCHED

Minimum documentation searched (classification system followed by classification symbols)

B32B1/00-43/00; B29C65/48; C09J5/06; C09J123/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-58339 A (JSR CORP) 26 February 2004 (2004-02-26) claims, paragraphs [0060]-[0063], [0074], [0077]-[0080], [0087], examples 1, 3, 6, 7 | 1-5 |
| A | JP 10-286911 A (NIPPON ZEON CO LTD) 27 October 1998 (1998-10-27) claims, paragraphs [0033], [0046]-[0048], [0053]-[0055] | 1-5 |
| A | JP 2017-156531 A (KONICA MINOLTA INC) 07 September 2017 (2017-09-07) claims, paragraphs [0032], [0141]-[0144] | 1-5 |
| A | WO 2009/131070 A1 (ALPS ELECTRIC CO., LTD.) 29 October 2009 (2009-10-29) claims, paragraphs [0030]-[0034], [0054]-[0056] | 1-5 |
| A | JP 2005-80569 A (SUMITOMO BAKELITE CO LTD) 31 March 2005 (2005-03-31) claims, paragraphs [0009]-[0011] | 1-5 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/007911**

| Patent document cited in search report | | | Publication date (day/month/year) | Patent family member(s) | Publication date (day/month/year) |
|---|---|---|---|---|---|
| JP | 2004-58339 | A | 26 February 2004 | (Family: none) | |
| JP | 10-286911 | A | 27 October 1998 | (Family: none) | |
| JP | 2017-156531 | A | 07 September 2017 | (Family: none) | |
| WO | 2009/131070 | A1 | 29 October 2009 | US 2011/0045262 A1 claims, paragraphs [0033]-[0037], [0056]-[0058] DE 112009000990 B KR 10-2011-0008244 A | |
| JP | 2005-80569 | A | 31 March 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021241516 A1
- JP 4752364 B
- JP 2007276142 A
- JP 2003306650 A
- WO 2010110323 A1
- JP 2015054885 A
- WO 2017199980 A1